# EUROPÄISCHE PATENTSCHRIFT

(11) **EP 1 924 469 B1**
(45) Veröffentlichungstag und Bekanntmachung des Hinweises auf die Patenterteilung: **23.06.2010**
(21) Anmeldenummer: 06791849.0
(22) Anmeldetag: 06.09.2006
(51) Int. Cl.: B60R 22/46

(54) **LEISTUNGSSTRAFFER MIT SYNCHRON GESTEUERTER BLOCKIERKLINKE**
POWER PRETENSIONER WITH SYNCHRONOUSLY CONTROLLED LOCKING LATCH
PRETENSIONNEUR ELECTRIQUE COMPRENANT UN CLIQUET DE BLOCAGE A COMMANDE SYNCHRONISEE

(30) Priorität: 15.09.2005 DE 102005044209
(43) Veröffentlichungstag der Anmeldung: 28.05.2008
(73) Patentinhaber: AUTOLIV DEVELOPMENT AB, 447 83 Vargarda (SE)
(72) Erfinder: SCHMIDT, Martin, 2533 Elmshorn (DE); VOSS, Tobias, 25336 Klein Nordende (DE)
(74) Vertreter: Müller, Karl-Ernst
(86) Internationale Anmeldenummer: PCT/EP2006/008656
(87) Internationale Veröffentlichungsnummer: WO 2007/031217

(56) Entgegenhaltungen:
- EP-A1- 0 093 233
- WO-A-03/082640
- GB-A- 2 310 786

## Beschreibung

Die Erfindung betrifft einen Gurtaufroller mit einem Gehäuse, einer darin gelagerten Gurtwelle und einer fahrzeugsensitiv und/oder gurtbandsensitiv arbeitenden Blockiereinrichtung für die Gurtwelle, sowie mit einer auf die Gurtwelle einwirkenden Strammvorrichtung bestehend aus einem über eine Antriebsvorrichtung in Drehung zu versetzenden Antriebsrad, das bei Auslösung der Strammvorrichtung mit der Gurtwelle koppelbar ist, wobei das Antriebsrad in dem Ruhezustand mittels einer in eine an dem Antriebsrad ausgebildete Blockierverzahnung eingreifenden Blockierklinke gegen eine in Gurtauszugsrichtung wirkende Kraft an dem Gehäuse des Gurtaufrollers kraftübertragend festgelegt ist, und eine Drehung des Antriebsrades in Gurtaufwickelrichtung zu Beginn des Strammvorganges die Blockierklinke durch Abgleiten ihrer Zähne an der Blockierverzahnung außer Eingriff mit der Blockierverzahnung drängt.

Ein derartiger Gurtaufroller ist in der WO 03/082640 A1 beschrieben. Die Besonderheit dieser Gurtaufroller-Gurtstrammer-Kombination besteht darin, dass statt einer sonst bei Gurtaufrollern üblichen gehäusefesten Sperrverzahnung zum Eingriff einer gurtbandsensitiv und/oder fahrzeugsensitiv gesteuerten Sperrklinke zur Blockierung der Gurtwelle die Sperrverzahnung nunmehr Bestandteil des Antriebsrades der Strammvorrichtung ist, welches in der Ruhestellung über eine in eine an dem Antriebsrad ausgebildete Blockierverzahnung eingreifende Blockierklinke festgelegt ist, so dass dadurch die Sperrverzahnung sozusagen Bestandteil des Gehäuses wird. Für den Strammvorgang allerdings hat diese Blockierverzahnung mit Blockierklinke keine Wirkung, damit sich das Antriebsrad in Gurtaufwickelrichtung frei drehen kann. Diese Blockierkinematik wird bei dem bekannten Gurtaufroller dadurch erreicht, dass die Blockierklinke mittels einer Feder in deren Eingriffsstellung mit der Blockierverzahnung vorgespannt und Blockierverzahnung und Blockierklinke derart zueinander ausgerichtet sind, dass eine Drehung des Antriebsrades in Gurtabwickelrichtung stets blockiert und eine Drehung des Antriebsrades in Gurtaufwickelrichtung durch Überratschen der Blockierklinke über die Blockierverzahnung des Antriebsrades hinweg ermöglicht ist.

Mit einer derartigen Auslegung ist der Nachteil verbunden, dass im Rahmen eines Strammvorganges durchaus das Risiko von Beschädigungen der Blockierverzahnung und/oder der Blockierklinke besteht, so dass es unter Umständen zu einer Fehlfunktion bei einer anschließenden Sperrung der Gurtwelle über die Blockierverzahnung des mittels der Blockierklinke gehäusefest festzulegenden Antriebsrades kommen kann.

Der Erfindung liegt daher die Aufgabe zugrunde, einen Gurtaufroller mit den gattungsgemäßen Merkmalen im Hinblick auf das Zusammenwirken von Blockierverzahnung des Antriebsrades mit der zugeordneten Blockierklinke zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass ein von der Bewegung der Blockierklinke aus deren Eingriffsstellung in deren Freigabestellung mitgenommenes und die Blockierklinke während der Dauer des Strammvorganges in der Freigabestellung festlegendes Steuerelement vorgesehen ist, welches nach Abschluss der Strammbewegung bei Drehung der Gurtwelle in Gurtauszugsrichtung die Blockierklinke zur Blockierverzahnung zurückführt und synchron in die Eingriffsstellung mit der Blockierverzahnung einsteuert.

Mit der Erfindung ist der Vorteil verbunden, dass zwar beim Anlauf des Antriebsrades zu Beginn der Strammbewegung der Blockierklinke wie beim Stand der Technik zunächst selbsttätig in ihre Freigabestellung überführt wird, dass aber anschließend mittels des hierzu vorgesehenen und von der Blockierklinke bei ihrer Ausschwenkbewegung mitgenommenen Steuerelements die Blockierklinke in der ausgeschwenkten Freigabestellung festgelegt ist. Damit sind während des weiteren Strammvorganges Deformationen der Verzahnung vermieden. Bei einer Drehrichtungsumkehr am Ende des Strammvorganges mit einer Belastung der Gurtwelle in Gurtabwickel-richtung führt eine Drehung des Antriebsrades zu einer entsprechenden Beaufschlagung des Steuerelementes, welches dadurch aktiv die Blockierklinke bis zu deren Eingriff in die Blockierverzahnung zurückführt; entsprechend sorgt das Steuerelement dabei für eine synchronisierte Einsteuerung der Blockierklinke in die Blockierverzahnung, so dass eine Zahn-auf-Zahn-Blockierung sicher vermieden ist.

Nach einem Ausführungsbeispiel der Erfindung ist vorgesehen, dass das Steuerelement als neben dem Antriebsrad über einen begrenzten Drehwinkel drehbar angeordneter Ring ausgebildet und mittels einer Kulissenführung an die Blockierklinke gekoppelt ist, wobei das Steuerelement eine in seiner die Blockierklinke in deren Freigabestellung haltenden Position wirksame Raste und wenigstens einen derart in Eingriff mit der Blockierverzahnung stehenden Steueransatz aufweist, dass der Steueransatz bei Drehung des Antriebsrades in Gurtaufwickelrichtung über die Blockierverzahnung hinwegratscht und bei Drehrichtungsumkehr mit einer Drehung des Antriebsrades in Gurtabwickelrichtung das Steuerelement an das Antriebsrad koppelt. Aufgrund der Verbindung der Blockierklinke mit dem als Steuerelement wirkenden drehbaren Ring wird das Steuerelement zu Beginn des Strammvorganges durch die automatische Ausschwenkbewegung der Blockierklinke mitgenommen und verdreht, bis die an dem Ring angeordnete Raste gehäusefest einrastet und dadurch die Blockierklinke entgegen der Wirkung der auf die Blockierklinke einwirkenden Feder in der Freigabestellung festlegt. Im Falle einer Drehrichtungsumkehr nimmt nun die Blockierverzahnung des Antriebsrades den Steueransatz des Ringes mit und verdreht diesen, bis dessen Raste aus der Raststellung wieder freikommt, so dass die dadurch bewirkte Drehung des Ringes die Blockierklinke wieder in die Blockierverzahnung einsteuert; dabei ist der Steueransatz so angeordnet, dass die Einsteuerung der Blockierklinke in die Blockierverzahnung synchron erfolgt und eine Zahn-auf-Zahn-Blockierung vermieden ist.

Im einzelnen kann nach einem Ausführungsbeispiel der Erfindung vorgesehen sein, dass die zwischen Blockierklinke und Steuerelement ausgebildete Kulissenführung aus einem an dem Steuerelement ausgebildeten Führungsschlitz und aus einem an der Blockierklinke befindlichen, in den Führungsschlitz eingreifenden Stift besteht.

Hinsichtlich der Ausbildung der an dem Ring ausgebildeten Raste ist nach einem Ausführungsbeispiel der Erfindung vorgesehen, dass die Raste des Steuerelements durch einen sich in Umfangsrichtung des Steuerelements erstreckenden, an seinem freien Ende mit einer Ausbauchung versehenen Federarm gebildet ist, dessen Ausbauchung in der Raststellung des Steuerelementes einen gehäusefesten Anschlag übergreift.

Gemäß einem Ausführungsbeispiel der Erfindung ist der Steueransatz des Steuerelementes durch ein radial nach innen vorstehendes, entsprechend der Neigung der Zahnflanken der Blockierverzahnung angeordnetes Federbein gebildet, wobei an dem Steuerelement aus Gründen der Redundanz auch zwei Federbeine vorgesehen sein können.

In einer alternativen Ausführungsform der Erfindung ist hinsichtlich der Ausbildung des Steuerelementes vorgesehen, dass das Steuerelement aus einem schwenkbar angeordneten und die Blockierklinke bei ihrer Bewegung aus der Freigabestellung zurück zur Eingriffsstellung führenden Hebel, der mit einem zusätzlichen Steuerarm derart mit der Blockierverzahnung in Eingriff steht, dass der Steuerarm bei Drehung des Antriebsrades in Gurtaufwickelrichtung über die Blockierverzahnung hinwegratscht und bei Drehrichtungsumkehr mit einer Drehung des Antriebsrades in Gurtabwickelrichtung den Hebel an das Antriebsrad koppelt, und aus einer die Blockierklinke beaufschlagenden, zwei Raststellungen aufweisenden Feder besteht, die in ihrer einen Raststellung die Blockierklinke in Eingriff mit der Blockierverzahnung drückt und in ihrer anderen Raststellung die Blockierklinke außer Eingriff mit der Blockierverzahnung hält. Diese Ausgestaltung der Erfindung beruht auf dem sogenannten "Knackfrosch"-Prinzip, bei dem die die Blockierklinke in einer ersten Raststellung in die Blockierverzahnung des Antriebsrades drückende Feder eine zweite Raststellung aufweist, in welcher die Wirkung der Feder nach Überschreiten ihres Rastpunktes durch die zu Beginn des Strammvorganges aus der Eingriffsstellung in deren Freigabestellung gedrängte Blockierklinke nun umgekehrt wird und die Feder die Blockierklinke in deren Freigabestellung festlegt. Insofern stellt die Feder selbst einen Bestandteil des Steuerelementes zur aktiven Bewegung der Blockierklinke dar, und es ist ein weiteres Bauteil erforderlich, um die Blockierklinke bei Drehrichtungsumkehr entgegen der Kraft der "Knackfrosch"-Feder in Eingriff mit der Blockierverzahnung des Antriebsrades zurückzuführen. Dieses weitere Bauteil wird von einem Hebel gebildet, der über einen in die Blockierverzahnung eingreifenden Steuerarm bei Drehung des Antriebsrades in Gurtabwickelrichtung verschwenkt wird und dabei die Blockierklinke unter Überwindung der entgegengerichteten Kraft der "Knackfrosch"-Feder mitnimmt und in die Blockierverzahnung einsteuert.

Hierbei kann nach einem Ausführungsbeispiel der Erfindung vorgesehen sein, dass die Feder Blockierklinke und Hebel gemeinsam beaufschlagt.

In der Zeichnung sind Ausführungsbeispiele der Erfindung wiedergegeben, welche nachstehend beschrieben sind. Es zeigen:
- Fig. 1: eine Draufsicht auf die Antriebsseite eines gattungsgemäßen Gurtaufrollers mit dem gehäusefest festgelegten Antriebsrad sowie einem erfindungsgemäßen Steuerelement in der Eingriffsstellung der Blockierklinke,
- Fig. 2: den Gegenstand der Fig. 1 in der Freigabestellung der Blockierklinke,
- Fig. 3: das als drehbarer Ring ausgebildete Steuerelement in einer Einzeldarstellung,
- Fig. 4: eine andere Ausführungsform der Erfindung in einer Darstellung gemäß Fig. 2

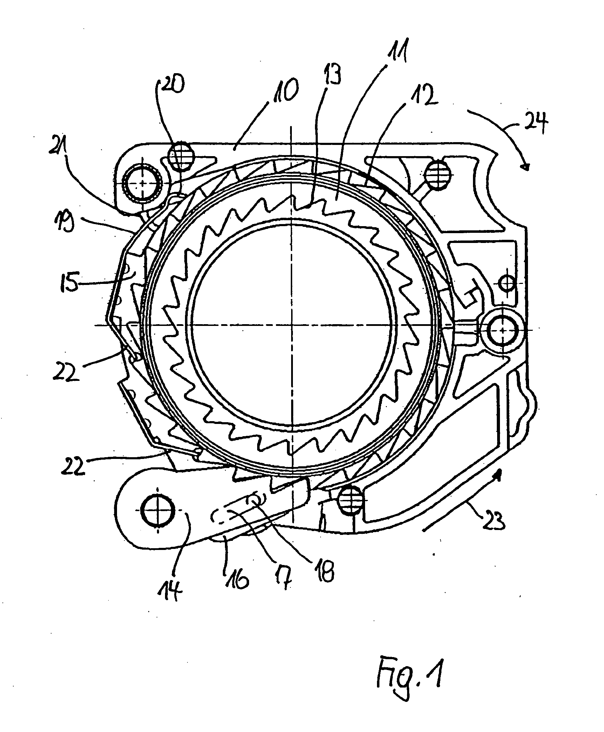

In Fig. 1 sind nur diejenigen Teile eines Gurtaufrollers mit den gattungsgemäßen Merkmalen dargestellt, die für das Verständnis der erfindungsgemäßen Merkmale von Bedeutung sind. Insofern wird hinsichtlich der Funktion der dargestellten Merkmale im Zusammenwirken mit den weiteren Bestandteilen eines Gurtaufroller auf die Offenbarung der gattungsbildenden WO03/082640 A1 Bezug genommen, deren Offenbarung ausdrücklich in die vorliegende Beschreibung einbezogen wird.

An dem Gehäuse 10 eines Gurtaufrollers ist demnach ein Antriebsrad 11 gelagert, welches eine äußere Blockierverzahnung 12 zum Festlegen des Antriebsrades 11 an dem Gehäuse 10 sowie eine Innenverzahnung 13 zum Zusammenwirken mit der nicht weiter dargestellten Sperrvorrichtung für die Sperrung der Gurtwelle aufweist. Das Antriebsrad 11 ist in der in Fig. 1 dargestellten Stellung mittels einer in die Blockierverzahnung 12 eingreifenden, gehäusefest gelagerten Blockierklinke 14 festgelegt, wobei die Blockierklinke 14 durch eine nicht weiter dargestellte Feder in die Blockierstellung vorgespannt ist.

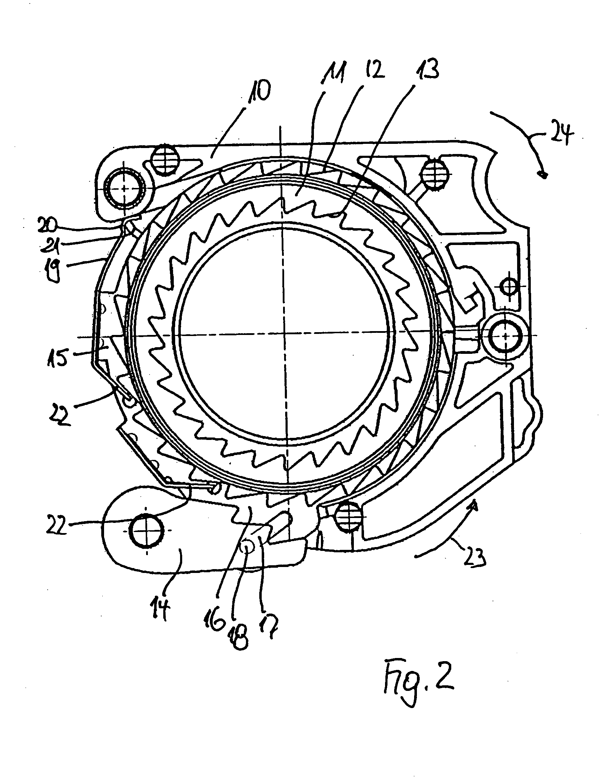

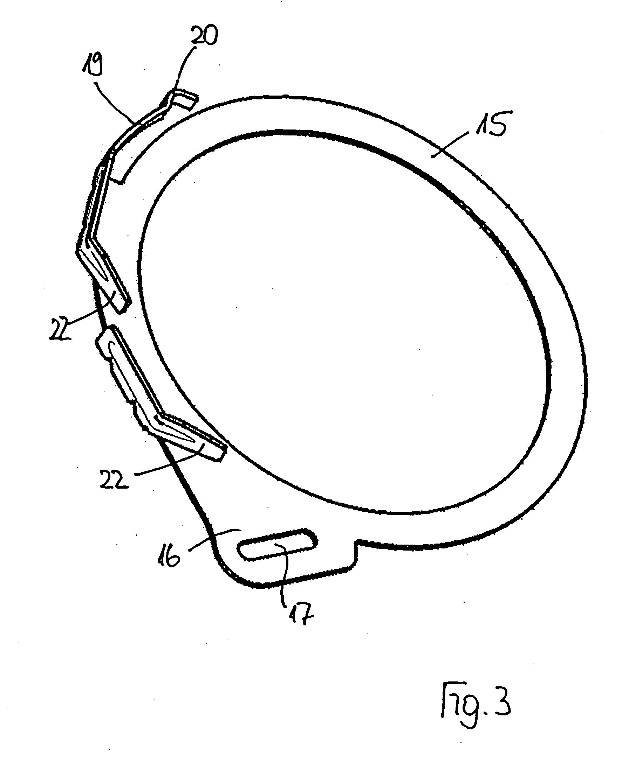

Zur Steuerung der Bewegung der Blockierklinke zwischen der in Figur 1 dargestellten Blockierstellung und einer in Fig. 2 dargestellten Freigabestellung ist ein im Einzelnen in Fig. 3 dargestelltes Steuerelement vorgesehen, welches als axial neben dem Antriebsrad 11 über einen begrenzten Drehwinkel drehbar angeordneter Ring 15 ausgebildet ist. Der Ring 15 ist über eine als Stift-Schlitz-Verbindung ausgeführte Kulissenführung an die Blockierklinke 14 gekoppelt, wobei in einem Ansatz 16 des Ringes 15 ein Führungsschlitz 17 ausgebildet ist, in welchen ein an der Blockierklinke 14 angebrachter Stift 18 eingreift. Der Führungsschlitz 17 ist dabei so ausgerichtet, dass bei einer Drehung des Ringes 15 die Blockierklinke 14 entsprechend zwischen ihrer Eingriffsstellung (Fig. 1) und ihrer Freigabestellung (Fig. 2) verschwenkt wird.

An dem Ring 15 ist ferner ein sich in Umfangsrichtung des Ringes 15 erstreckender Federarm 19 ausgebildet, der an seinem freien Ende eine Ausbauchung 20 aufweist, die in der einen Stellung des Ringes (Fig. 1) frei ist und in der anderen Stellung des Ringes 15 mit einem gehäusefesten Anschlag 21 verrastet, so dass dadurch der Ring 15 gehäusefest festgelegt ist. Ferner sind an dem Ring 15 zwei Federbeine 22 ausgebildet, die schräg radial einwärts in die Blockierverzahnung 12 des Antriebsrades 11 hineinreichen, wobei die Federbeine 22 mit einer der Neigung der Zahnflanken der Blockierverzahnung 12 entsprechenden Anordnung ausgeführt sind. Die Anordnung der Federbeine 22 ist dabei so getroffen, dass bei Drehung des Antriebsrades 11 während des Strammvorganges in Gurtaufwickelrichtung (Pfeil 23) die Federbeine 22 über die Blockierverzahnung 12 des Antriebsrades 11 hinwegratschen, während bei einer Drehung des Antriebsrades 11 in Gurtabwickelrichtung (Pfeil 24) sich die Federbeine 22 in der Blockierverzahnung 12 verhaken, so dass das Antriebsrad 11 den Ring 15 bei seiner Drehung in Gurtabwickelrichtung (Pfeil 24) mitnimmt.

In der in Fig. 1 dargestellten Position ist das Antriebsrad 11 durch Eingriff der Blockierklinke 14 in seine Blockierverzahnung 12 festgelegt und wird somit zum Bestandteil des Gehäuses 10, so dass bei Eingriff der nicht weiter dargestellten Sperrvorrichtung in die Innenverzahnung 13 des Antriebsrades 11 die Gurtwelle bei Normalbetrieb des Gurtaufrollers blockiert werden kann.

Kommt es zu Beginn einer Strammbewegung zu einer Drehung des Antriebsrades in Gurtaufwickelrichtung (Pfeil 23), so drängen die Zahnflanken der Blockierverzahnung 12 die Blockierklinke 14 außer Eingriff, wobei durch diese Bewegung aufgrund der Stift-Schlitz-Verbindung 17, 18 die Blockierklinke 14 den Ring 15 entsprechend verdreht, so dass der Federarm 19 mit Ausbauchung 20 des Ringes 15 mit dem gehäusefesten Anschlag 21 verrastet. In dieser Position hält der Ring 15 die Blockierklinke 14 in deren Freigabestellung, wie in Fig. 2 dargestellt, so dass sich die weitere Drehung des Antriebsrades 11 in Gurtaufwickelrichtung (Pfeil 23) ungehindert vollziehen kann.

Kommt es nach Abschluss der Strammbewegung zu einer Drehrichtungsumkehr, indem nun ein an der Gurtwelle eingreifender Gurtzug über die in die Innenverzahnung 13 des Antriebsrades 11 eingreifende Sperrvorrichtung eine Drehung des Antriebsrades in Gurtabwickelrichtung (Pfeil 24) herbeiführt, so nimmt das Antriebsrad 11 bei dieser Drehbewegung den Ring 15 aufgrund der in die Blockierverzahnung 12 eingreifenden Federbeine 22 mit, so dass der Federarm 19 von dem gehäusefesten Anschlag 21 freikommt. Soweit sich also dann der Ring 15 mit dem Antriebsrad 11 in Richtung des Pfeils 24 mitdreht, wird durch diese Drehbewegung aufgrund der Stift-Schlitz-Verbindung 17, 18 die Blockierklinke 14 wiederum in Eingriff mit der Blockierverzahnung 12 des Antriebsrades 11 geführt, so dass das Antriebsrad 11 gehäusefest festgelegt ist. Die Anordnung der Federbeine 22 an dem Ring 15 ist dabei so getroffen, dass eine synchronisierte Einsteuerung der Blockierklinke 14 in die Blockierverzahnung 12 gewährleistet ist.

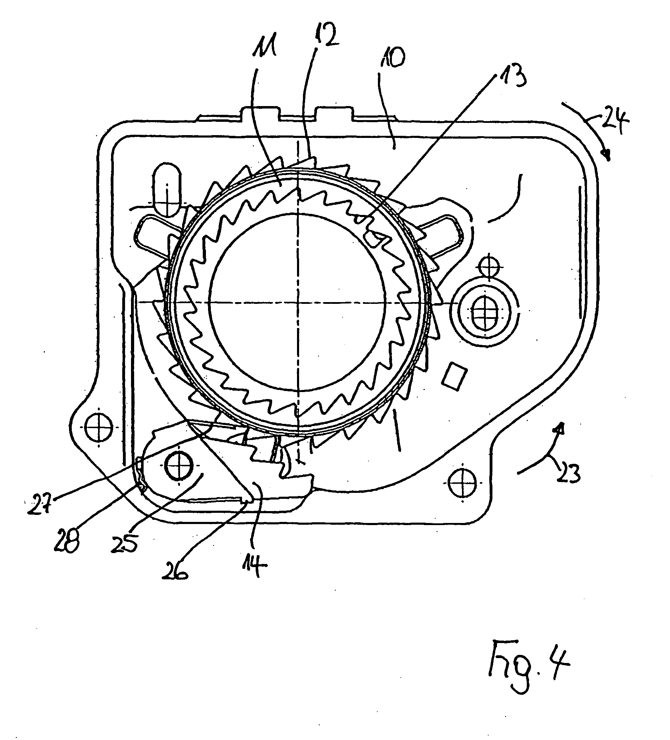

Bei dem in Fig. 4 dargestellten Ausführungsbeispiel geschieht die Steuerung der Blockierklinke 14 zwischen ihrer Eingriffstellung und ihrer Freigabestellung zunächst unter der Einwirkung einer nach dem "Knackfrosch"-Prinzip arbeitenden Feder 28, die in ihrer einen Raststellung die Blockierklinke 14 in Eingriff mit der Blockierverzahnung 12 des Antriebsrades 11 vorspannt. Bei Drehung des Antriebsrades 11 zu Beginn eines Strammvorganges in Gurtaufwickelrichtung (Pfeil 23) wird wie vorstehend beschrieben die Blockierklinke 14 durch die Zahnflanken der Blockierverzahnung 12 nach außen gedrängt, bis der Rastpunkt der Knackfrosch-Feder 28 überschritten ist, so dass die Knackfrosch-Feder 28 die Blockierklinke 14 nunmehr in ihrer Freigabestellung hält, wie in Fig. 4 dargestellt.

Soweit es eines weiteren Bestandteils des Steuerelementes zum Zurückführen der Blockierklinke 14 in deren Eingriffsstellung bedarf, ist hierzu ein Hebel 25 vorgesehen, der mit einem Führungsanschlag 26 an der Blockierklinke 14 anliegt und weiterhin einen in die Blockierverzahnung 12 des Antriebsrades 11 hineinreichenden Steuerarm 27 aufweist. Der Steuerarm 27 ist dabei, wie hinsichtlich der Federbeine 22 des Ringes 15 beim Ausführungsbeispiel gemäß Fig. 1 bis 3 beschrieben, so angeordnet, dass bei Drehung des Antriebsrades 11 in Gurtaufwickelrichtung (Pfeil 23) der Steuerarm 27 über die Blockierverzahnung 12 hinwegratscht, während bei einer Drehung des Antriebsrades 11 in Gurtabwickelrichtung (Pfeil 24) das Antriebsrad 11 den Steuerarm 27 mitnimmt und dadurch den Hebel 25 verschwenkt. Im Rahmen dieser Verschwenkung überwindet der Hebel 25 die auf die Blockierklinke 14 einwirkende Federkraft der Knackfrosch-Feder 28 und führt somit die Blockierklinke 14 in deren Eingriffstellung mit der Blockierverzahnung 12 des Antriebsrades 11 zurück.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einem Gehäuse (10), einer darin gelagerten Gurtwelle und einer fahrzeugsensitiv und/oder gurtbandsensitiv arbeitenden Blockiereinrichtung für die Gurtwelle, sowie mit einer auf die Gurtwelle einwirkenden Strammvorrichtung bestehend aus einem über eine Antriebsvorrichtung in Drehung zu versetzenden Antriebsrad (11), das bei Auslösung der Strammvorrichtung mit der Gurtwelle koppelbar ist, wobei das Antriebsrad (11) in dem Ruhezustand mittels einer in eine an dem Antriebsrad ausgebildete Blockierverzahnung (12) eingreifenden Blockierklinke (14) gegen eine in Gurtauszugsrichtung wirkende Kraft an dem Gehäuse (10) des Gurtaufrollers kraftübertragend festgelegt ist, und eine Drehung des Antriebsrades (11) in Gurtaufwickelrichtung zu Beginn des Strammvorganges die Blockierklinke (14) durch Abgleiten ihrer Zähne an der Blockierverzahnung (12) außer Eingriff mit der Blockierverzahnung (12) drängt, **dadurch gekennzeichnet, dass** ein von der Bewegung der Blockierklinke (14) aus deren Eingriffsstellung in deren Freigabestellung mitgenommenes und die Blockierklinke (14) während der Dauer des Strammvorganges in der Freigabestellung festlegendes Steuerelement (15, 25) vorgesehen ist, welches nach Abschluss der Strammbewegung bei Drehung der Gurtwelle in Gurtauszugsrichtung (Pfeil 24) die Blockierklinke (14) zur Blockierverzahnung (12) zurückführt und synchron in die Eingriffsstellung mit der Blockierverzahnung (12) einsteuert.

2. Gurtaufroller nach Anspruch 1, **dadurch gekennzeichnet, dass** das Steuerelement (15) als neben dem Antriebsrad (11) über einen begrenzten Drehwinkel drehbar angeordneter Ring ausgebildet und mittels einer Kulissenführung (17, 18) an die Blockierklinke (14) gekoppelt ist, wobei das Steuerelement (15) eine in seiner die Blockierklinke (14) in deren Freigabestellung haltenden Position wirksame Raste (19, 20) und wenigstens einen derart in Eingriff mit der Blockierverzahnung (12) stehenden Steueransatz (22) aufweist, dass der Steueransatz (22) bei Drehung des Antriebsrades (11) in Gurtaufwickelrichtung (Pfeil 23) über die Blockierverzahnung (12) hinwegratscht und bei Drehrichtungsumkehr mit einer Drehung des Antriebsrades (11) in Gurtabwickelrichtung (Pfeil 24) das Steuerelement (15) an das Antriebsrad (11) koppelt.

3. Gurtaufroller nach Anspruch 2, **dadurch gekennzeichnet, dass** die zwischen Blockierklinke (14) und Steuerelement (15) ausgebildete Kulissenführung aus einem an dem Steuerelement (15) ausgebildeten Führungsschlitz (17) und aus einem an der Blockierklinke (14) befindlichen, in den Führungsschlitz (17) eingreifenden Stift (18) besteht.

4. Gurtaufroller nach Anspruch 2 oder 3, **dadurch gekennzeichnet, dass** die Raste des Steuerelements (15) durch einen sich in Umfangsrichtung des Steuerelements (15) erstreckenden, an seinem freien Ende mit einer Ausbauchung (20) versehenen Federarm (19) gebildet ist, dessen Ausbauchung (20) in der Raststellung des Steuerelementes (15) einen gehäusefesten Anschlag (21) übergreift.

5. Gurtaufroller nach einem der Ansprüche 2 bis 4, **dadurch gekennzeichnet, dass** der Steueransatz (22) des Steuerelementes (15) durch ein radial nach innen vorstehendes, entsprechend der Neigung der Zahnflanken der Blockierverzahnung (12) angeordnetes Federbein gebildet ist.

6. Gurtaufroller nach Anspruch 5, **dadurch gekennzeichnet, dass** an dem Steuerelement (15) zwei Federbeine (22) vorgesehen sind.

7. Gurtaufroller nach Anspruch 1, **dadurch gekennzeichnet, dass** das Steuerelement aus einem schwenkbar angeordneten und die Blockierklinke (14) bei ihrer Bewegung aus der Freigabestellung zurück zur Eingriffsstellung führenden Hebel (25), der mit einem zusätzlichen Steuerarm (27) derart mit der Blockierverzahnung (12) in Eingriff steht, dass der Steuerarm (27) bei Drehung des Antriebsrades (11) in Gurtaufwickelrichtung (Pfeil 23) über die Blockierverzahnung (12) hinwegratscht und bei Drehrichtungsumkehr mit einer Drehung des Antriebsrades (11) in Gurtabwickelrichtung (Pfeil 24) den Hebel (25) an das Antriebsrad (11) koppelt, und aus einer die Blockierklinke (14) beaufschlagenden, zwei Raststellungen aufweisenden Feder (28) besteht, die in ihrer einen Raststellung die Blockierklinke (14) in Eingriff mit der Blockierverzahnung (12) drückt und in ihrer anderen Raststellung die Blockierklinke (14) außer Eingriff mit der Blockierverzahnung (12) hält.

8. Gurtaufroller nach Anspruch 7, **dadurch gekennzeichnet, dass** die Feder (28) Blockerklinke (14) und Hebel (25) gemeinsam beaufschlagt.

## Claims

1. A self-locking belt retractor with a housing (10), a belt shaft mounted therein and a vehicle-sensitively and/or belt webbing-sensitively operating blocking device for the belt shaft, as well as with a tensioning device acting on the belt shaft consisting of a drive gear (11) to be rotated via a driving device, which drive gear upon triggering of the tensioning device can be coupled with the belt shaft, wherein the drive gear (11) in the state of rest is arrested in a force-transmitting manner on the housing (10) of the belt retractor against a force acting in belt extraction direction by means of a blocking pawl (14) engaging in a blocking toothing (12) formed on the drive gear, and rotation of the drive gear in belt winding direction at the beginning of the tensioning operation forces the blocking pawl out of engagement with the blocking toothing (12) through sliding-off of its teeth on the blocking toothing, **characterized in that** a control element (15, 25) taken along from the movement of the blocking pawl (14) from its engagement position into its release position and arresting the blocking pawl (14) in the release position during the tensioning operation is provided, which following completion of the tensioning movement upon rotation of the belt shaft in belt extraction direction (arrow 24) returns the blocking pawl (14) to the blocking toothing (12) and synchronously guides said blocking pawl into engagement position with the blocking toothing (12).

2. The belt retractor according to Claim 1, **characterized in that** the control element (15) is formed as a ring arranged rotatably over a limited angle of rotation next to the drive gear (11) and is coupled to the blocking pawl (14) by means of a link guide (17, 18), wherein the control element (15) comprises a retainer (19, 20) which is effective in its position holding the blocking pawl (14) in its release position and at least one control shoulder (22) being engaged with the blocking toothing (12) in such a manner, that the control shoulder (22) upon rotation of the drive gear (11) in belt winding direction (arrow 23) ratchets over the blocking toothing 12 and upon direction of rotation reversal with a rotation of the drive gear (11) in belt unwinding direction (arrow 24) couples the control element (15) to the drive gear (11).

3. The belt retractor according to Claim 2, **characterized in that** the link guide formed between blocking pawl (14) and control element (15) consists of a guide slot (17) formed on the control element (15) and of a pin (18) which is located on the blocking pawl (14) and engages in the guide slot (17).

4. The belt retractor according to Claim 2 or 3,
**characterized in that** the retainer of the control element (15) is formed through a spring arm (19) extending in circumferential direction of the control element (15) which spring arm at its free end is provided with an outward curvature (20), which outward curvature (20) in the engagement position of the control element (15) overlaps a housing-fixed stop (21).

5. The belt retractor according to any one of the Claims 2 to 4, **characterized in that** the control shoulder (22) of the control element (15) is formed through a spring leg protruding radially to the inside in accordance with the inclination of the tooth flanks of the blocking toothing (12).

6. The belt retractor according to Claim 5, **characterized in that** on the control element (15) two spring legs (22) are provided.

7. The belt retractor according to Claim 1, **characterized in that** the control element consists of a lever (25) which is arranged capable of swivelling and which guides the blocking pawl (14) during its movement from the release position back to the engagement position, which lever with an additional control arm (27) is engaged with the blocking toothing (12) in such a manner that the control arm (27) upon rotation of the drive gear (11) in belt winding direction (arrow 23) ratchets over the blocking toothing (12) and upon direction of rotation reversal with a rotation of the drive gear (11) in belt unwinding direction (arrow 24) couples the lever (25) to the drive gear (11), and of a spring (28) having two engagement positions which spring loads the blocking pawl (14) and which spring in its one engagement position pushes the blocking pawl (14) into engagement with the blocking toothing (12) and in its other engagement position holds the blocking pawl (14) out of engagement with the blocking toothing (12).

8. The belt retractor according to Claim 7, **characterized in that** the spring (28) jointly loads blocking pawl (14) and lever (25).

## Revendications

1. Enrouleur de ceinture autobloquant, avec un logement (10), un axe de ceinture logé dans celui-ci et un dispositif de blocage pour l'axe de ceinture fonctionnant de façon sensible au véhicule et/ou sensible à la sangle, ainsi qu'avec un prétensionneur agissant sur l'axe de ceinture, composé d'un pignon d'entraînement (11) adapté pour être mis en rotation par un dispositif d'entraînement et pouvant être couplé avec l'axe de ceinture en cas de déclenchement du prétensionneur, dans lequel le pignon d'entraînement (11) à l'état de repos est immobilisé avec transmission de force sur le logement (10) de l'enrouleur de ceinture au moyen d'un cliquet de blocage (14) venant en prise avec une denture de blocage (12) réalisée sur le pignon d'entraînement à l'encontre d'une force agissant dans la direction d'extraction de la ceinture, et une rotation du pignon d'entraînement (11) dans la direction d'enroulement de la ceinture au début de l'opération de prétensionnement fait sortir le cliquet de blocage (14) de la mise en prise avec la denture de blocage (12) par un glissement de ses dents sur la denture de blocage (12), **caractérisé en ce qu'**il est prévu un élément de commande (15, 25) entraîné par le mouvement du cliquet de blocage (14) de la position en prise de celui-ci vers la position de déblocage de celui-ci et immobilisant le cliquet de blocage (14) dans la position de déblocage pendant la durée de l'opération de prétensionnement, ledit élément ramenant à l'issue du mouvement de prétensionnement en cas de d'une rotation de l'axe de ceinture dans la direction d'extraction de la ceinture (flèche 24) le cliquet de blocage (14) à la denture de blocage (12) et l'orientant de façon synchrone dans la position de mise en prise avec la denture de blocage (12).

2. Enrouleur de ceinture selon la revendication 1, **caractérisé en ce que** l'élément de commande (15) est réalisé comme une bague disposée à côté du pignon d'entraînement (11) de façon à pouvoir tourner sur un angle de rotation limité et couplé au moyen d'un guide de coulisse (17, 18) avec le cliquet de blocage (14), dans lequel l'élément de commande (15) présente un cran (19, 20) actif dans sa position maintenant le cliquet de blocage (14) dans la position de déblocage de celui-ci, et au moins une saillie de commande (22) se trouvant en prise avec la denture de blocage (12) de telle sorte que la saillie de commande (22) en cas de rotation du pignon d'entraînement (11) défile sur la denture de blocage (12) dans la direction d'enroulement de la ceinture (flèche 23), et couple l'élément de commande (15) avec le pignon d'entraînement (11) lorsque le sens de rotation est inversé avec une rotation du pignon d'entraînement (11) dans la direction de déroulement de la ceinture (flèche 24).

3. Enrouleur de ceinture selon la revendication 2, **caractérisé en ce que** le guide de coulisse réalisé entre le cliquet de blocage (14) et l'élément de commande (15) se compose d'une fente de guidage (17) réalisée sur l'élément de commande (15) et d'une goupille (18) se trouvant sur le cliquet de blocage (14) et venant en prise dans la fente de guidage (17).

4. Enrouleur de ceinture selon les revendications 2 ou 3, **caractérisé en ce que** le cran de l'élément de commande (15) est réalisé par un bras de ressort (19) s'étendant dans la direction circonférentielle de l'élément de commande (15) et muni d'une protubérance (20) à son extrémité libre, ladite protubérance (20) passant dans la position d'arrêt de l'élément de commande (15) par-dessus une butée (21) fixée au logement.

5. Enrouleur de ceinture selon l'une quelconque des revendications 2 à 4, **caractérisé en ce que** la saillie de commande (22) de l'élément de commande (15) est réalisée par une jambe de force dépassant radialement vers l'intérieur, disposée selon l'inclinaison des profils de dent de la denture de blocage (12).

6. Enrouleur de ceinture selon la revendication 5, **caractérisé en ce que** sur l'élément de commande (15) deux jambes de force (22) sont prévues.

7. Enrouleur de ceinture selon la revendication 1, **caractérisé en ce que** l'élément de commande se compose d'un levier (25) disposé de façon pivotante et guidant le cliquet de blocage (14) lors de son mouvement revenant de la position de déblocage à la position de mise en prise, ledit levier se trouvant en prise par un bras de commande (27) supplémentaire avec la denture de blocage (12) de telle sorte que le bras de commande (27) défile sur la denture de blocage (12) en cas de rotation du pignon d'entraînement (11) dans la direction d'enroulement de la ceinture (flèche 23), et couple le levier (25) avec le pignon d'entraînement (11) lorsque le sens de rotation est inversé avec une rotation du pignon d'entraînement (11) dans la direction de déroulement de ceinture (flèche 24), et d'un ressort (28) sollicitant le cliquet de blocage (14) et présentant deux positions d'arrêt, ledit ressort poussant dans l'une de ses positions d'arrêt le cliquet de blocage (14) à venir en prise avec la denture de blocage (12) et maintenant dans son autre position d'arrêt le cliquet de blocage (14) hors prise avec la denture de blocage (12).

8. Enrouleur de ceinture selon la revendication 7, **caractérisé en ce que** le ressort (28) sollicite le cliquet de blocage (14) et le levier (25) en même temps.
